# EUROPÄISCHE PATENTSCHRIFT

(11) **EP 2 798 193 B1**
(45) Veröffentlichungstag und Bekanntmachung des Hinweises auf die Patenterteilung: **21.06.2017**
(21) Anmeldenummer: 12812652.1
(22) Anmeldetag: 21.12.2012
(51) Int. Cl.: F02M 59/36, F02M 59/46, F02M 63/00

(54) **VENTIL**
VALVE
SOUPAPE

(30) Priorität: 28.12.2011 DE 102011090006
(43) Veröffentlichungstag der Anmeldung: 05.11.2014
(73) Patentinhaber: Continental Automotive GmbH, 30165 Hannover (DE)
(72) Erfinder: BLEECK, Matthias, 93049 Regensburg (DE); GUGEL, Bernd, 93049 Regensburg (DE); KRÜGER, Thomas, 98660 Themar (DE); WÖLLISCH, Bernd, 93413 Cham (DE)
(86) Internationale Anmeldenummer: PCT/EP2012/076695
(87) Internationale Veröffentlichungsnummer: WO 2013/098249

(56) Entgegenhaltungen:
- DE-A1-102007 028 960
- DE-A1-102007 034 038
- JP-A- 9 112 731

## Beschreibung

Die Erfindung betrifft ein Ventil. Insbesondere wird ein derartiges Ventil in einer Hochdruckpumpe zur Förderung von Fluid für ein Speichereinspritzsystem für Brennkraftmaschinen von Kraftfahrzeugen verwendet.

Derartige Ventile unterliegen starken Beanspruchungen, insbesondere, wenn sie Dauerbelastungen, wie zum Beispiel in Hochdruckpumpen, ausgesetzt sind. Da Hochdruckpumpen Drücken von beispielsweise 2000 bar oder mehr ausgesetzt sind, werden hohe Anforderungen an die Ventile in derartigen Pumpen gestellt.

Gleiches gilt für die Aktuatoranordnungen in derartigen Ventilen. Diese müssen insbesondere über einen langen Zeitraum der Lebensdauer des Kraftfahrzeugs verlässlich das Ventil öffnen und/oder schließen können und in vorgegebenen Toleranzbereichen arbeiten.

Die DE 10 2007 028 960 A1 beschreibt ein Ventil in einer Hochdruckpumpe. Das Ventil weist eine Ventilnadel mit einem hydraulischen Mitnehmer auf, der bei auf die Ventilnadel einströmendem Kraftstoff eine in Öffnungsrichtung wirkende Kraft auf die Ventilnadel ausübt. Ein Ventilkörper zum Schließen des Ventils ist unabhängig von der Ventilnadel in eine Offenposition bewegbar, in der ein Fluidfluss durch das Ventil freigegeben ist.

Die JP 9 112 731 A zeigt ein Ventil für eine Kraftstoffpumpe. Das Ventil weist einen Aktuator zum Bewegen eines Stifts auf. Der Stift ist nicht fest mit einem Ventilelement zum Verschließen des Ventils verbunden.

Es ist wünschenswert, ein Ventil anzugeben, das einen verlässlichen Betrieb ermöglicht.

In einer Ausführungsform der Erfindung umfasst ein Ventil eine Feder mit einer Federkraft. Das Ventil umfasst einen Aktuator mit einer entgegen der Federkraft wirkbaren Aktuatorkraft. Das Ventil umfasst weiterhin einen Stift, der mittels des Aktuators betätigbar ist. Das Ventil umfasst ein Dichtelement, das mit dem Stift koppelbar ist. Das Ventil umfasst weiterhin einen Dichtsitz, so dass das Ventil geschlossen ist, wenn das Dichtelement an dem Dichtsitz anliegt. Der Stift ist mittels des Aktuators in Richtung des Dichtelements bewegbar. Der Stift ist mittels der Feder in Richtung weg vom Dichtelement bewegbar. Das Dichtelement ist unabhängig von dem Stift in eine Offenposition bewegbar, in der ein Fluidfluss durch das Ventil freigegeben ist.

Weiterhin umfasst der Aktuator einen Elektromagnet. Der Elektromagnet umfasst eine Spule, die einen Polkern umgibt. Der Aktuator umfasst weiterhin einen Magnetanker. Der Magnetanker ist mittels des Elektromagnets bewegbar. Der Stift ist mit dem Magnetanker gekoppelt und so angeordnet, dass er entlang einer Längsachse des Elektromagnets durch den Polkern verläuft. Der Magnetanker ist auf einer Seite des Polkerns angeordnet und auf der entgegengesetzten Seite des Polkerns ist ein separates Anschlagelement angeordnet, das eine Bewegung des Stifts in Richtung des Polkerns begrenzt.

Insbesondere ist das Anschlagelement aus einem härteren Material gebildet als der Polkern. Das Anschlagelement dient als Anschlag für die Bewegung des Stifts und schützt gleichzeitig den Polkern. Dadurch ist ein verlässlicher Betrieb auch über einen langen Lebenszeitraum möglich, da das Anschlagelement stets eine feste Grenze für die Bewegung des Stifts darstellt. Toleranzschwankungen auf Grund von Abnutzung durch den Anschlag des Stifts werden gering gehalten.

Das Anschlagelement und der Polkern sind insbesondere aus zwei eigenständigen Bauteilen gefertigt. Das Anschlagelement und der Polkern sind gemäß Ausführungsformen aus unterschiedlichen Materialien gebildet. Der Polkern ist insbesondere aus einem ferromagnetischen Material gebildet. Das Anschlagelement ist insbesondere aus einem möglichst harten Material gefertigt. Somit ist ein geringer Verschleiß möglich.

Das Ventil wird geöffnet, wenn der Aktuator seine Aktuatorkraft auf den Stift überträgt und der Stift relativ zu dem Dichtsitz bewegt wird. Der Stift gelangt in Berührung mit dem Dichtelement und drückt dieses von dem Dichtsitz weg, so dass der Dichtsitz und das Dichtelement voneinander beabstandet sind, so dass ein Fluidfluss durch das Dichtelement freigegeben ist. Das Ventil ist in seiner Offenposition.

Dadurch, dass der Stift und das Dichtelement nicht fest miteinander verbunden sind, ist es möglich, dass das Dichtelement auch dann von dem Dichtsitz abhebt und ein Fluidfluss freigegeben ist, wenn der Stift in seiner Ruheposition verbleibt und der Aktuator keine Aktuatorkraft auswirkt. Beispielsweise hebt das Dichtelement während eines Saughubs der Pumpe von dem Dichtsitz ab. Dazu muss das Ventil und insbesondere der Aktuator nicht elektrisch angesteuert werden. Der Stift wird durch die Feder in seiner Ruheposition gehalten, in der er nicht in Kontakt mit dem Dichtelement ist.

Der Stift des Ventils weist einen vorspringenden Bereich auf, der dem Dichtsitz zugewandt ist. Die Bewegung des Stifts in Richtung des Dichtelements ist durch den vorspringenden Bereich und den Dichtsitz begrenzt.

Gemäß Ausführungsformen weist der Stift einen weiteren vorspringenden Bereich auf, der eine Bewegung des Stifts in Richtung des Aktuators begrenzt. Somit ist die Bewegung des Stifts in Richtung des Aktuators begrenzt, auch wenn der Stift keine feste Verbindung mit dem Dichtelement aufweist.

Gemäß Ausführungsformen sind der Magnetanker und der Stift relativ zueinander unbeweglich gekoppelt. Somit ist der Stift mittels des Magnetankers durch den Elektromagnet bewegbar. Der Magnetanker ist durch eine Bewegung des Stifts bewegbar.

Gemäß Ausführungsformen weist der Magnetanker mindestens eine Magnetankerausnehmung auf zur hydraulischen Kommunikation zwischen einer dem Polkern zugewandten Seite des Magnetankers und einer dem Polkern abgewandten Seite des Magnetankers.

Gemäß weiteren Ausführungsformen umfasst das Anschlagelement eine Ausnehmung, durch die der Stift geführt ist. Das Anschlagelement umfasst mindestens eine weitere Ausnehmung zur hydraulischen Kommunikation zwischen einer dem Polkern abgewandten Seite des Anschlagelements und einer dem Polkern zugewandten Seite des Anschlagelements.

Durch die Magnetankerausnehmung und/oder die mindestens eine weitere Ausnehmung des Anschlagelements ist ein Druckausgleich im Innenraum des Aktuators möglich.

Der Aktuator wird in Ausführungsformen in einem Ventil verwendet, in dem ein Dichtelement fest mit dem Stift verbunden ist. Das Dichtelement folgt einer Bewegung des Stifts in eine erste Richtung und in die entgegengesetzte Richtung.

Gemäß weiteren Ausführungsformen wird der Aktuator in einem Ventil verwendet, bei dem der Stift und das Dichtelement separate Einzelteile sind, die koppelbar sind. Das Dichtelement folgt einer Bewegung des Stifts in eine erste Richtung. Einer Bewegung des Stifts in die entgegengesetzte Richtung folgt das Dichtelement nicht gezwungenermaßen.

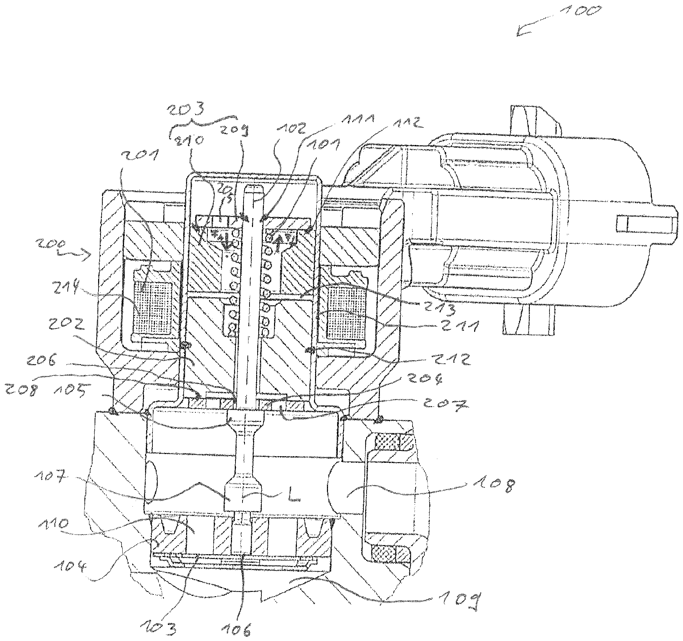

Weitere Vorteile, Merkmale und Weiterbildungen ergeben sich aus den nachfolgenden in Verbindung mit der Figur erläuterten Beispielen.

Die einzige Figur zeigt eine schematische Darstellung eines Ventils mit einer Aktuatoranordnung in einer Schnittansicht gemäß einer Ausführungsform.

Die Figur zeigt ein Ventil 100. Das Ventil 100 ist insbesondere ein Einlassventil einer Pumpe. Die Pumpe ist insbesondere als Hochdruckpumpe, vorzugsweise als Radialkolbenpumpe ausgebildet. In der Pumpe ist ein Pumpenkolben bewegbar gelagert. An einem Ende des Pumpenkolbens befindet sich ein Druckraum. Um den Druckraum mit Fluid befüllen zu können, weist dieser eine Zulaufleitung auf, in der vorzugsweise das als Einlassventil ausgebildete Ventil 100 angeordnet ist. Das Ventil 100 ist vorzugsweise als digital geschaltetes Ventil ausgebildet. Das Ventil 100 erleichtert die Befüllung des Druckraums und ist eingerichtet beim Ausstoßen des Fluids ein Zurückströmen des Fluids in die Zulaufleitung zu verhindern, wenn das Ventil 100 geschlossen ist. Fluid kann beispielsweise über eine Ablaufleitung aus dem Druckraum ausgestoßen werden.

Das Ventil 100 weist eine Feder 101, einen Stift 102 und ein Dichtelement 103 auf. Die Feder 101 spannt den Stift 102 in Richtung weg von dem Dichtelement 103 vor, indem sich die Feder 101 an einem Polkern 202 eines Aktuators 200 des Ventils 100 abstützt. Die Feder 101 stützt sich mit ihrem zweiten Ende an einem Ankerelement 209 ab. Das Ankerelement 209 ist gemeinsam mit einem weiteren Ankerelement 210 Teil eines Magnetankers 203.

Der Stift 102 ist länglich ausgedehnt und verläuft entlang einer Längsachse L durch den Polkern 202. Auf einer Seite des Polkerns 202 ist der Stift 102 mit dem Ankerelement 209 gekoppelt. Insbesondere ist das Ankerelement 209 mittels einer Schweißverbindung 111 mit dem Stift 102 gekoppelt. Auf der entlang der Längsachse gegenüberliegenden Seite des Polkerns 202 weist der Stift 102 einen vorspringenden Bereich 105 auf. Der Stift 102 weist einen weiteren vorspringenden Bereich 107 auf, der einem Dichtsitz 104 des Ventils 100 zugewandt ist.

Der Aktuator 200 umfasst einen Elektromagnet 201. Der Elektromagnet 201 umfasst eine Spule 214, die insbesondere ringförmig um den Polkern 202 angeordnet ist. Die Spule 214 umgibt die Längsachse L koaxial. Entlang der Längsachse L ist der Magnetanker 203, darauffolgend der Polkern 202 und darauffolgend der Dichtsitz 104 angeordnet. Auf einer dem Aktuator 200 abgewandten Seite des Dichtsitzes 104 ist das Dichtelement 103 angeordnet. Der Dichtsitz 104 umgibt zumindest eine Durchgangsausnehmung 110. Über die Durchgangsausnehmung 110 kann Fluid strömen, wenn das Dichtelement 103 nicht an dem Dichtsitz 104 anliegt. Insbesondere kann Fluid aus einem Fluidzulauf 108 durch die Durchgangsausnehmungen 110 in einen Fluidablauf 109 strömen.

Wird Strom beziehungsweise Spannung an den Elektromagnet 201 angelegt, insbesondere an die Spule 214, wirkt dieser einen Magnetkraft auf den Magnetanker 203 in Richtung des Dichtelements 103 aus. Diese Aktuatorkraft Fa wird auf den Stift 102 übertragen, da sowohl das Ankerelement 209 und das weitere Ankerelement 210 über eine Schweißverbindung 112 als auch der Magnetanker 203 mit dem Stift 102 über die Schweißverbindung 111 relativ zueinander unbeweglich gekoppelt sind. Somit wird der Stift 102 durch die Aktuatorkraft Fa in Richtung des Dichtelements 103 bewegt. Der Stift 102 koppelt mit dem Dichtelement 103 und drückt dieses im weiteren Bewegungsablauf von dem Dichtsitz 104 weg. Somit ist das Ventil geöffnet.

Das Ventil 100 öffnet sich auch ohne dass der Stift 102 bewegt wird beziehungsweise ohne dass der Stift 102 und das Dichtelement 103 in Kontakt mit einander geraten, lediglich aufgrund einer Druckdifferenz vor und hinter dem Dichtelement 103. Das Dichtelement 103 hebt von dem Dichtsitz 104 ab, wenn der Druck auf der Seite des Zulaufs 108 größer ist als auf der Seite des Ablaufs 109.

Das Ventil kann also auf zwei Arten geöffnet werden. Das Ventil kann durch den Aktuator erzwungenermaßen geöffnet werden oder gegen einen Druck aus dem Ablauf 109 offengehalten werden. Das Ventil 100 kann aber auch passiv öffnen, ohne dass es elektrisch angesteuert werden muss, wenn die Pumpe sich in der Ansaugphase befindet und ihren Saughub durchführt und Fluid in den Druckraum saugt.

In einer Ruheposition, wenn der Aktuator 200 nicht bestromt wird, drückt die Feder 101 den Stift 102 in eine Richtung weg von dem Dichtelement 103. Eine Federkraft Ff der Feder 101 hält den Stift 102 so, dass das Dichtelement 103 an den Dichtsitz 104 anliegen kann. Die Federkraft Ff und die Aktuatorkraft Fa sind entgegengesetzt gerichtet. Die Federkraft Ff und die Aktuatorkraft Fa sind gleichgerichtet zur Längsachse L. Zum Schließen des Ventils wird das Dichtelement durch die Druckverhältnisse vor und hinter dem Dichtelement gegen den Dichtsitz 104 gedrückt und verhindert somit einen Fluidfluss aus dem Ablauf 109 in den Zulauf 108.

Die Bewegung des Dichtelements 103 relativ zum Dichtsitz 104 ist also in einem Betriebszustand des Ventils unabhängig von einer Bewegung des Stifts 102. Durch den Stift 102 kann das Öffnen des Ventils 100 unterstützt werden und/oder das Ventil 100 in seiner Offenposition gehalten werden auch während eines Förderhubs in einer Kompressionsphase der Pumpe. Somit kann eine Teilförderung der Pumpe erreicht werden, bei der ein vorgegebener Anteil des angesaugten Fluids aus dem Druckraum wieder zurück in den Zulauf 108 gefördert wird. Dazu wird das Dichtelement 103 durch den Stift 102 beabstandet zu dem Dichtsitz 104 gehalten. Der Aktuator 200 wirkt die Aktuatorkraft Fa so auf den Stift 102 aus, dass der Stift 102 das Dichtelement 103 gegen den Fluiddruck aus dem Druckraum halten kann und somit Fluid durch die Durchgangsausnehmungen 110 zurück in den Zulauf 108 strömen kann.

Eine Vollförderung der Pumpe ist unabhängig von dem Aktuator 200 realisierbar. In der Ansaugphase der Pumpe muss der Aktuator 200 nicht gegen eine Federkraft arbeiten, die das Dichtelement gegen den Dichtsitz drückt. In der Kompressionsphase unterstützt das Dichtelement 103 die Feder 101 beim Schießvorgang, da das Dichtelement 103 den Stift 102 bewegt. Somit sind kurze Schließzeiten des Ventils 101 realisierbar. Ein Luftspalt 213 zwischen dem weiteren Ankerelement 210 und dem Polkern 202 ist im Ruhezustand konstant.

Der Magnetanker 203 mit dem gekoppelten Stift 102 wird bei bestromtem Elektromagnet 201 in Richtung des Polkerns 202 gezogen. Der Stift 102 öffnet das Dichtelement 103. Bei unbestromtem Elektromagnet 201 wird der Magnetanker 203 mit dem Stift 102 durch die Feder 101 in die Ausgangsstellung gedrückt. Das Einlassventil wird dadurch entsperrt.

Eine Bewegung des Stifts 102 in Richtung weg von dem Dichtelement 103 wird durch ein Anschlagelement 204 begrenzt. Insbesondere schlägt der vorspringende Bereich 105 des Stifts 102 an das flächig ausgedehnte Anschlagelement 204 an. Der Stift 102 ist von dem federnden Dichtelement 103 entkoppelt. Das Dichtelement 103 ist so gestaltet, dass bei ausgeschaltetem Elektromagnet 201 kein Druck gegen das Dichtelement 103 durch den Stift 102 vorhanden ist. Das Ventil 100 kann unabhängig von dem Elektromagnet 201 und dem Stift 102 arbeiten und insbesondere unabhängig von dem Elektromagnet 201 in der Ansaugphase öffnen. In der Kompressionsphase wirkt die Federkraft des Dichtelements zusätzlich zur Feder 101, um das Einlassventil zu schließen.

Das Anschlagelement 204 dient als Begrenzung der Bewegung des Stifts 102. Wenn der vorspringende Bereich 105 mit dem Anschlagelement 204 in Kontakt kommt, ist eine Bewegung des Stifts 102 weiter weg vom Dichtelement 103 nicht mehr möglich. Dadurch ist auch ein Abstand 106 zwischen dem Stift 102 und dem Dichtelement 103 in der Ruheposition vorgegeben. Die Bewegung des Stifts in Richtung des Dichtelements 103 wird durch den weiteren vorspringenden Bereich 107 und den Dichtsitz 104 begrenzt.
Das Anschlagelement 204 weist eine Ausnehmung 206 auf, durch die der Stift 102 geführt ist. Das Anschlagelement 204 ist auf der dem Magnetanker 203 abgewandten Seite des Polkerns 202 angeordnet. Insbesondere ist das Anschlagelement 204 über eine Schweißverbindung 208 mit dem Polkern 202 gekoppelt. Das Anschlagelement 204 ist insbesondere eine gehärtete Scheibe die den weicheren Polkern 202 schützt.

Das Anschlagelement 204 weist gemäß Ausführungsformen mindestens eine weitere Ausnehmung 207 auf. Diese ist hydraulisch mit der Ausnehmung des Polkerns 202 gekoppelt, in der der Stift 102 durch den Polkern 202 geführt ist. Weiterhin weist das Ankerelement 209 eine Magnetankeraufnehmung 204 auf, die hydraulisch mit der Ausnehmung des Polkerns 202 gekoppelt ist. Somit sind die dem Dichtelement 103 abgewandte Seite des Magnetankers 203 und die dem Dichtelement 103 zugewandte Seite des Anschlagelements 204 hydraulisch miteinander gekoppelt. Somit kann ein Druckausgleich zwischen dem fluidführenden Bereich am Fluidzulauf 108 und dem Bereich des Magnetankers 203 stattfinden. Somit wird eine Bewegung des Stifts 102 aufgrund von Druckungleichgewichten vermieden.

Der Polkern 202 ist über eine Schweißverbindung 212 mit einem Gehäuse 211 gekoppelt, in dem auch der Magnetanker 203 und teilweise der Stift 102 angeordnet sind. Das Gehäuse 211 umgibt den Stift 102, den Magnetanker 203 und den Polkern 202 fluiddicht.

Durch das Anschlagelement 204 wird eine Bewegung des Stifts 102 in Richtung der Federkraft Ff begrenzt und Kräfte beim Abbremsen der Bewegung des Stifts 102 von dem Anschlagelement 204 aufgenommen. Zudem ist durch die Begrenzung der Bewegung des Stifts 102 eine präzise Einstellung des Luftspalts 213 möglich. Somit ist durch das Anschlagelement 204 eine Begrenzung für die Bewegung des Stifts 102 gegeben, obwohl der Stift 102 nicht fest mit dem Dichtelement 103 gekoppelt ist.

## Patentansprüche

1. Ventil, umfassend:
- eine Feder (101) mit einer Federkraft (Ff),
- einen Aktuator (200) mit einer entgegen der Federkraft (Ff) wirkbaren Aktuatorkraft (Fa),
- einen Stift (102), der mittels des Aktuators (200) betätigbar ist,
- ein Dichtelement (103), das mit dem Stift (102) koppelbar ist,
- einen Dichtsitz (104), so dass das Ventil geschlossen ist, wenn das Dichtelement (103) an dem Dichtsitz (104) anliegt,
- wobei der Stift (102) mittels des Aktuators (200) in Richtung des Dichtelements (103) bewegbar ist,
- der Stift (102) mittels der Feder (101) in Richtung weg vom Dichtelement (103) bewegbar ist, wobei das Dichtelement (103) unabhängig von dem Stift (102) in eine Offenposition bewegbar ist, in der ein Fluidfluss durch das Ventil freigegeben ist, wobei
- der Aktuator (200) umfasst:
- einen Elektromagnet (201), umfassend eine Spule (214), die einen Polkern (202) umgibt,
- einen Magnetanker (203), der mittels des Elektromagnets (201) bewegbar ist, wobei
- der Stift (102) mit dem Magnetanker (203) gekoppelt ist und so angeordnet ist, dass er entlang einer Längsachse (L) des Elektromagnets (201) durch den Polkern (202) verläuft, so dass der Magnetanker (203) auf einer Seite des Polkerns (202) angeordnet ist und auf der entgegengesetzten Seite des Polkerns (202) ein separates Anschlagelement (204) angeordnet ist, das eine Bewegung des Stifts (102) in Richtung des Polkerns (202) begrenzt, das Ventil ist **dadurch gekennzeichnet, dass**
- das Anschlagelement (204) aus einem härteren Material gebildet ist als der Polkern (202),
wobei
- der Stift (102) einen vorspringenden Bereich (107) aufweist, der dem Dichtsitz (104) zugewandt ist, und
- die Bewegung des Stifts (102) in Richtung des Dichtelements (103) durch den vorspringenden Bereich (107) und den Dichtsitz (104) begrenzt ist.

2. Ventil nach Anspruch 1, bei dem der Stift (102) einen weiteren vorspringenden Bereich (105) aufweist, der eine Bewegung des Stifts (102) in Richtung des Aktuators (200) begrenzt.

3. Ventil nach einem der Ansprüche 1 oder 2, bei dem das Dichtelement (103) beabstandet zu dem Stift (102) angeordnet ist, wenn das Ventil geschlossen ist.

4. Ventil nach einem der Ansprüche 1 bis 3, bei dem das Dichtelement (103) durch die Aktuatorkraft (Fa) in die Offenposition bewegbar ist.

5. Ventil nach Anspruch 1 bis 4, bei der der Magnetanker (203) und der Stift (102) relativ zueinander unbeweglich gekoppelt sind.

6. Ventil nach einem der Ansprüche 1 bis 5, bei der der Magnetanker (203) mindestens eine Magnetankerausnehmung (205) aufweist zur hydraulischen Kommunikation zwischen einer dem Polkern (202) zugewandten Seite des Magnetankers (203) und einer dem Polkern (202) abgewandten Seite des Magnetankers (203).

7. Ventil nach einem der Ansprüche 1 bis 6, bei der das Anschlagelement (204) eine Ausnehmung (206) aufweist, durch die der Stift (102) geführt ist und mindestens eine weitere Ausnehmung (207) aufweist zur hydraulischen Kommunikation zwischen einer dem Polkern (202) abgewandten Seite des Anschlagelements (204) und einer dem Polkern (202) zugewandten Seite des Anschlagelements (204).

8. Ventil nach einem der Ansprüche 1 bis 7, umfassend eine Schweißverbindung (208), die das Anschlagelement (204) mit dem Polkern (202) koppelt.

9. Ventil nach einem der Ansprüche 1 bis 8, bei dem die Feder (101) mit einem Ende mit dem Polkern (202) gekoppelt ist und mit einem gegenüberliegenden Ende mit dem Magnetanker (203).

## Claims

1. Valve, comprising:
- a spring (101) with a spring force (Ff),
- an actuator (200) with an actuator force (Fa) which can act counter to the spring force (Ff),
- a pin (102) which can be actuated by means of the actuator (200),
- a sealing element (103) which can be coupled to the pin (102),
- a sealing seat (104), with the result that the valve is closed when the sealing element (103) bears against the sealing seat (104),
- wherein the pin (102) can be moved in the direction of the sealing element (103) by means of the actuator (200),
- the pin (102) can be moved in the direction away from the sealing element (103) by means of the spring (101), wherein the sealing element (103) can be moved independently of the pin (102) into an open position, in which a fluid flow through the valve is released,
wherein
- the actuator (200) comprises:
- an electromagnet (201), comprising a coil (214) which surrounds a pole core (202),
- a magnet armature (203) which can be moved by means of the electromagnet (201), wherein
- the pin (102) is coupled to the magnet armature (203) and is arranged in such a way that it runs along a longitudinal axis (L) of the electromagnet (201) through the pole core (202), with the result that the magnet armature (203) is arranged on one side of the pole core (202) and a separate stop element (204) is arranged on the opposite side of the pole core (202), which separate stop element (204) limits a movement of the pin (102) in the direction of the pole core (202), the valve is **characterized in that**
- the stop element (204) is formed from a harder material than the pole core (202), wherein
- the pin (102) has a projecting region (107) which faces the sealing seat (104), and
- the movement of the pin (102) in the direction of the sealing element (103) is limited by the projecting region (107) and the sealing seat (104).

2. Valve according to Claim 1, in which the pin (102) has a further projecting region (105) which limits a movement of the pin (102) in the direction of the actuator (200).

3. Valve according to one of Claims 1 and 2, in which the sealing element (103) is arranged spaced apart from the pin (102) when the valve is closed.

4. Valve according to one of Claims 1 to 3, in which the sealing element (103) can be moved into the open position by the actuator force (Fa).

5. Valve according to Claims 1 to 4, in which the magnet armature (203) and the pin (102) are coupled such that they are immovable relative to one another.

6. Valve according to one of Claims 1 to 5, in which the magnet armature (203) has at least one magnet armature recess (205) for hydraulic communication between a side of the magnet armature (203), which side faces the pole core (202), and a side of the magnet armature (203), which side faces away from the pole core (202).

7. Valve according to one of Claims 1 to 6, in which the stop element (204) has a recess (206), through which the pin (102) is guided, and has at least one further recess (207) for hydraulic communication between a side of the stop element (204), which side faces away from the pole core (202), and a side of the stop element (204), which side faces the pole core (202).

8. Valve according to one of Claims 1 to 7, comprising a welded connection (208) which couples the stop element (204) to the pole core (202).

9. Valve according to one of Claims 1 to 8, in which the spring (101) is coupled with one end to the pole core (202) and with an opposite end to the magnet armature (203).

## Revendications

1. Soupape, comprenant :
- un ressort (101) avec une force de ressort (Ff),
- un actionneur (200) avec une force d'actionneur (Fa) pouvant agir à l'encontre de la force de ressort (Ff),
- une goupille (102), qui peut être actionnée au moyen de l'actionneur (200),
- un élément d'étanchéité (103), qui peut être accouplé à la goupille (102),
- un siège d'étanchéité (104), de telle sorte que la soupape soit fermée lorsque l'élément d'étanchéité (103) s'applique contre le siège d'étanchéité (104),
- la goupille (102) pouvant être déplacée au moyen de l'actionneur (200) dans la direction de l'élément d'étanchéité (103),
- la goupille (102) pouvant être déplacée au moyen du ressort (101) dans une direction l'éloignant de l'élément d'étanchéité (103), l'élément d'étanchéité (103) pouvant être déplacé indépendamment de la goupille (102) dans une position ouverte dans laquelle un flux de fluide à travers la soupape est permis,
- l'actionneur (200) comprenant :
- un électroaimant (201), comprenant une bobine (214), qui entoure un noyau polaire (202),
- un induit magnétique (203) qui peut être déplacé au moyen de l'électroaimant (201),
- la goupille (102) étant accouplée à l'induit magnétique (203) et étant disposée de telle sorte qu'elle s'étende le long d'un axe longitudinal (L) de l'électroaimant (201) à travers le noyau polaire (202), de telle sorte que l'induit magnétique (203) soit disposé sur un côté du noyau polaire (202) et que sur le côté opposé du noyau polaire (202) soit disposé un élément de butée séparé (204) qui limite un mouvement de la goupille (102) dans la direction du noyau polaire (202), la soupape étant **caractérisée en ce que**
- l'élément de butée (204) est formé d'un matériau plus dur que le noyau polaire (202),
- la goupille (102) présente une région en saillie (107) qui est tournée vers le siège d'étanchéité (104), et
- le déplacement de la goupille (102) dans la direction de l'élément d'étanchéité (103) est limité par la région en saillie (107) et par le siège d'étanchéité (104).

2. Soupape selon la revendication 1, dans laquelle la goupille (102) présente une région supplémentaire en saillie (105) qui limite un mouvement de la goupille (102) dans la direction de l'actionneur (200)

3. Soupape selon l'une quelconque des revendications 1 ou 2, dans laquelle l'élément d'étanchéité (103) est disposé à distance de la goupille (102) lorsque la soupape est fermée.

4. Soupape selon l'une quelconque des revendications 1 à 3, dans laquelle l'élément d'étanchéité (103) peut être déplacé par la force de l'actionneur (Fa) dans la position d'ouverture.

5. Soupape selon les revendications 1 à 4, dans laquelle l'induit magnétique (203) et la goupille (102) sont accouplés de manière non déplaçable l'un par rapport à l'autre.

6. Soupape selon l'une quelconque des revendications 1 à 5, dans laquelle l'induit magnétique (203) présente au moins un évidement d'induit magnétique (205) pour la communication hydraulique entre un côté de l'induit magnétique (203) tourné vers le noyau polaire (202) et un côté de l'induit magnétique (203) opposé au noyau polaire (202) .

7. Soupape selon l'une quelconque des revendications 1 à 6, dans laquelle l'élément de butée (204) présente un évidement (206) à travers lequel est guidée la goupille (102) et au moins un évidement supplémentaire (207) pour la communication hydraulique entre un côté de l'élément de butée (204) opposé au noyau polaire (202) et un côté de l'élément de butée (204) tourné vers le noyau polaire (202).

8. Soupape selon l'une quelconque des revendications 1 à 7, comprenant une connexion soudée (208) qui accouple l'élément de butée (204) au noyau polaire (202).

9. Soupape selon l'une quelconque des revendications 1 à 8, dans laquelle le ressort (101) est accouplé par une extrémité au noyau polaire (202) et par une extrémité opposée à l'induit magnétique (203).
